# EUROPEAN PATENT SPECIFICATION

(11) **EP 0 513 981 B1**
(45) Date of publication and mention of the grant of the patent: **12.07.1995**
(21) Application number: 92302725.4
(22) Date of filing: 27.03.1992
(51) Int. Cl.: A01K 1/02, A01K 1/015

(54) **Apparatus for use in farrowing and/or heating**
Abferkelbucht und Verfahren zur Heizung
Dispositif pour la mise bas et pour le chauffage

(30) Priority: 28.03.1991 GB 9106688
(43) Date of publication of application: 19.11.1992
(73) Proprietor: ACO Severin Ahlmann GmbH & Co. KG, D-24755 Rendsburg (DE)
(72) Inventor: Baxter, Michael Robert, Isleworth, Middlesex (GB)
(74) Representative: Laight, Martin Harvey

(56) References cited:
- GB-A- 953 617
- GB-A- 1 282 731
- US-A- 2 722 910

## Description

The present invention relates to a farrowing pen for a sow and piglets. In a second aspect the invention also relates to heating apparatus for heating piglets.

The nearly universal way (used on ninety per cent of pig farms) of protecting piglets from crushing by the sow is to confine the sow in a farrowing crate. The crate consists of a series of horizontal metal bars held in place by a metal frame. The size of the crate is intended to prevent a sow from flopping down sideways to lie onto her flank, a movement which she has little control over and which consequently poses a danger to the piglets. Earlier housing systems for sows consisted of a single horizontal bar positioned some 200mm from the wall, all around the pen and some 200mm above the floor. This was intended to prevent the sow from lying against the walls, with the risk of trapping piglets at the base of the walls.

It is an object of the invention to provide apparatus which will prevent or reduce crushing of piglets in a farrowing area, whilst allowing greater freedom of movement and comfort for the sow than has previously been available.

In GB 953,617 (Levy) there is described a farrowing unit comprising a frame having longitudinal side walls and transverse end walls surrounding a farrowing area for a sow and piglets. Side regions are boxed in by members spaced from the floor of the farrowing area to provide so-called nesting recesses in which piglets can shelter to avoid crushing by the sow. Each boxing-in member includes a member which is inclined and slopes downwardly and outwardly away from the farrowing area.

Also in GB 953,617 (Levy) there is shown a whelping unit for use in the whelping of bitches. The whelping unit shown is rectangular, and has a rectangular bed provided for the bitch in the centre of the whelping unit. Side parts 106 surrounding the bed slope downwardly and inwardly towards the bed.

According to the present invention there is provided a farrowing pen for a sow and piglets comprising retaining means surrounding a farrowing area and including a member spaced from a floor of the farrowing area to provide a protected region beneath the member for piglets to avoid crushing during lying down of a sow, characterised in that the said member is a wall member inclined to the vertical and sloping downwardly and inwardly towards the farrowing area, with a lower end of the wall member spaced from the floor of the farrowing area to provide the said protected region, the wall member providing an inclined surface such that a sow leaning against the wall member can slide down the wall member to the floor of the farrowing area.

It is particularly preferred that the wall member has a substantially continuous surface facing inwardly towards the farrowing area. The wall member may comprise a solid wall panel mounted on a steel framework, or may be part of a solid wall, for example cast of concrete and clad with wood or plastics material. Although the surface of the wall member may be interrupted, for example for drainage or air circulation, or due to the construction of the wall member, it is preferred that the surface is entirely continuous, for example a smooth plastics material or a smooth wooden panel.

Previously known piglet protecting devices were designed to prevent the sow from lying down in undesirable ways. By contrast, a sow guiding apparatus in accordance with this feature of the invention encourages the sow to lie down in the way she wants to. Given a free choice in a large pen, sows will chose to lie down against a solid wall. When provided with an inclined wall member with a substantially continuous surface along one wall of a large pen, sows choose to use the inclined wall member in preference to a vertical wall. The guidance apparatus of the invention provides an escape region for the piglets by leaving a gap between the bottom of the inclined wall member and the floor.

Preferably the wall member is inclined to the vertical at an angle lying in the range 10° to 15°, preferably about 12¹/₂°. Preferably the wall member is spaced from the floor by a distance in the range 150mm to 250mm, for example about 170mm. Conveniently the depth of the inclined wall member along the inclined surface is in the range 500 to 700mm, preferably about 600mm.

A farrowing pen in accordance with the invention may be provided by utilising an elongate wall member and mounting means therefore, which is adapted to be installed in an existing farrowing pen, the mounting means being secured to existing walls and setting the wall member as has been described.

There is also provided in accordance with the invention the use for guiding a sow during lying down on the floor in a farrowing area, of a wall member inclined to the vertical and sloping downwardly and inwardly towards the farrowing area, the wall member having a lower end spaced from the floor of the farrowing area to provide a protected region beneath the wall member for piglets to avoid crushing during lying down of the sow.

In accordance with a preferred form, there may be provided a farrowing pen for a sow or sows, comprising confining walls surrounding the farrowing area, the confining walls comprising one or more wall members as set out hereinbefore, together with further walls and or other restraining means such as rails or gates completing the pen, but not including an inclined wall member as has been set out. Thus it is particularly advantageous that the pen may include only one or a few, of the said wall members, the remaining confining walls being of conventional arrangement. The sow will then choose to use the inclined wall member of the invention when lying down.

Turning now to an additional second aspect of the invention, which may be provided, it is a requirement to provide a low energy heating system for piglets in a farrowing system. Young piglets are highly susceptible to cold stress, and their survival and viability depends to a large extent upon keeping them warm. This, however, poses fundamental problems for the pig producer. To keep the whole of the building warm would, in addition to being prohibitively expensive, impose heat stress on the sow.

Localised heating for piglets (referred to as creep heating) is usually provided by a radiant heat lamp, or heated floor panels, but these have various disadvantages.

It is a preferred additional object of the present invention in its second aspect, to provide improved localised heating for piglets which will give sufficient heating for the piglets and yet will avoid discomfort due to overheating.

Accordingly, there may also be provided in a farrowing pen according to the invention, heating apparatus comprising a first heating means having an output of a relatively high intensity for attracting living creatures to a heated area, and a second heating means having an output of a relatively low intensity for heating the creatures in the heated area. The creatures may for example comprise animals or birds, particularly piglets being reared after farrowing, but also the invention may find application in heating other farm animals and birds.

Conveniently each heating means emits radiant energy and the radiant energy emitted per unit area of the first heating means is relatively high, compared with the radiant energy emitted per unit area of the second heating means. Conveniently each heating means may comprise a heating element embedded in a wall or floor for example of polymer concrete, the heat output per unit area of the first heating means being high relative to the heat output per unit area of the second heating means. By way of example, the ratio of the output per unit area may be in the range of ratios from one and a half to one (1.5:1), to five to one (5:1), conveniently a ratio of about two to one (2:1).

This further feature of the invention arises from the realisation that, in rearing piglets, localised heating gives fundamental problems because the young piglet is poor at behavioral thermo-regulation, which means it is poor at detecting heat sources. A heat source which is hot enough for the piglet to detect will be too hot when it lies down near the heat source. When creep heating has been provided by a radiant heat lamp, used with typical reflectors, this produces a highly uneven distribution of radiant energy at piglet level. At its peak this is sufficient for piglets to detect and at its periphery it is comfortable for piglets to lie in. As a result, the piglets are in a continuous state of disturbance as they try to pack into the comfort zone. Heated floor panels, although more energy efficient are unsatisfactory because they are either too cool for piglets to detect the heat or too hot for piglets to be able to lie on them for long.

The further feature of the present invention solves the problem by providing two heating means, one to attract the piglets to the heated area (called the creep area) by being particularly warm, and the other sufficient to be comfortable for piglets to lie on or near for prolonged periods.

Preferably the first heating means is provided at a higher position than the second heating means, preferably at a height in the range 50mm to 200mm above a floor of the said heated area. Preferably the second heating means is adapted to be situated in or under a floor.

In a preferred form, the heating apparatus comprises a floor component housing the second heating means and a wall component upstanding from the floor component and housing the first heating means. In a particularly preferred form, the first heating means is housed in the wall component in a position facing towards the second heating means in the floor component and at a height in the region of the snout of a piglet, and the wall component adjoins the floor component by a curved junction, whereby in operation a piglet is attracted to the wall component by the first heating member and then rolls over or otherwise moves from the wall component to a lying position on the floor component in the region of the second heating means. Conveniently the upstanding wall component and the floor component, are cast together as a single unit of polymer concrete, and the heating elements are cast into the apparatus. An additional feature may be that a source of artificial light is also provided, for example cast into the unit, as light has been found to orient young piglets to a creep heater.

An embodiment of the invention will now be described by way of example with reference to the accompanying drawings, in which:-
Figure 1 is a diagrammatic perspective view of a farrowing pen embodying the invention;
Figure 2 is a plan view of a main supporting structure for the apparatus of Figure 1;
Figure 3 is a front elevation of the support structure shown in Figure 2;
Figure 4 is a side section through the main components of the apparatus of Figure 1, taken along the lines IV IV in Figures 2 and 3;
Figure 5 is an explanatory diagram, taken generally in a direction A in Figure 1, showing the operation of a guidance wall member embodying the invention for avoiding the crushing of piglets;
Figure 6 is a diagrammatic perspective view of heating apparatus which may be used in an embodiment of the invention, for use in the apparatus of Figure 1; and
Figure 7 is an explanatory diagram, taken generally in the direction B in Figure 6, showing the use of the heating apparatus by the piglet.

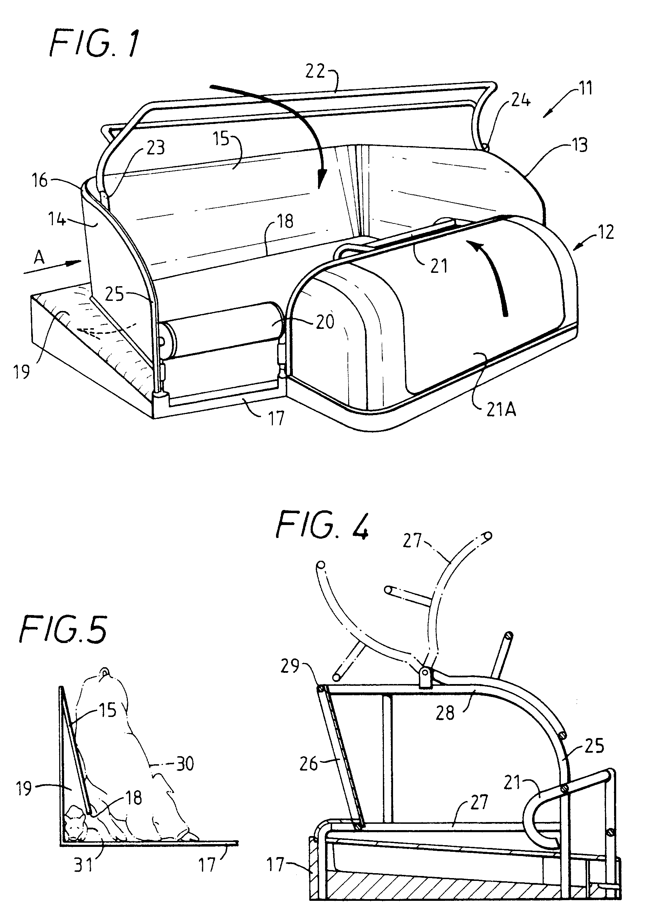

Referring firstly to Figure 1, the overall apparatus comprises a farrowing pen indicated generally at 11, communicating with a heated area for piglets, referred to as a creep box, and indicated generally at 12. The farrowing pen 11 is bounded on three sides by vertical side wall members 13 and 14 and by an inclined, rear wall member 15 at the rear. The wall members 13, 14 and 15 are conveniently moulded as a single unit, for example of synthetic plastics material. The wall members 13, 14 and 15 are supported on a framework 16 of metal tubing. The farrowing pen has a polymer concrete base 17 with a sloping floor for drainage, sloping downwardly away from the rear wall member 15. The wall member 15 terminates at a lower end 18 which is spaced from the floor 17 by a distance of approximately 170mm, leaving a gap sufficient to allow a piglet to pass under the lower edge 18. A similar gap is provided at the lower ends of the wall members 13 and 14, and there is an escape area indicated generally at 19 into which piglets can move to avoid crushing by the sow. Other components of the apparatus shown in Figure 1 comprise a roller step 20 across part of the front of the pen, and the creep box 12 for heating piglets. At the front of the creep box 12, facing inwardly towards the farrowing pen 11, are provided a framework of bars referred to as creep bars and indicated at 21. These allow piglets to enter the creep box 12, while keeping out the sow. The creep box 12 has an openable lid 21A to give access for an operator. Above the farrowing pen 11 is a pivoted rail structure 22 pivoted to the framework 16, at pivots 23 and 24. This structure may be lowered to restrain sows temporarily, or may be pivoted upwardly to allow movement of the sow.

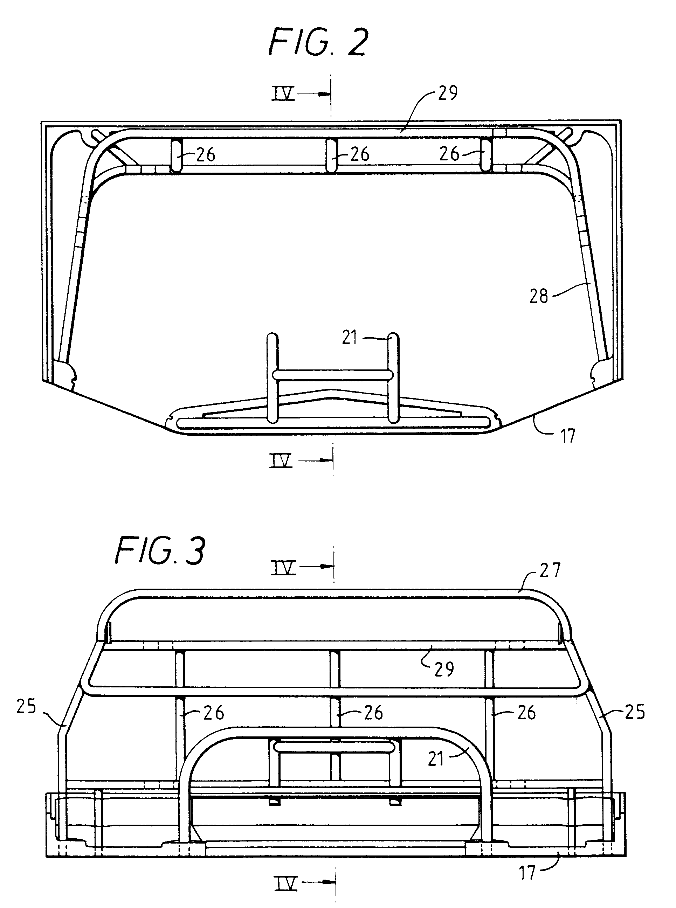

Referring to Figures 2, 3 and 4, the main components of the framework 16 will now be described in more detail. The cladding forming the wall members 13, 14 and 15 is supported on main side rails 25 and main back rails 26, rising from a base frame 27 fastened to the polymer concrete base 17. The side rails 25 are curved rearwardly and continue round the upper sides and back of the pen by way of upper side rails 28 and upper rear rail 29.

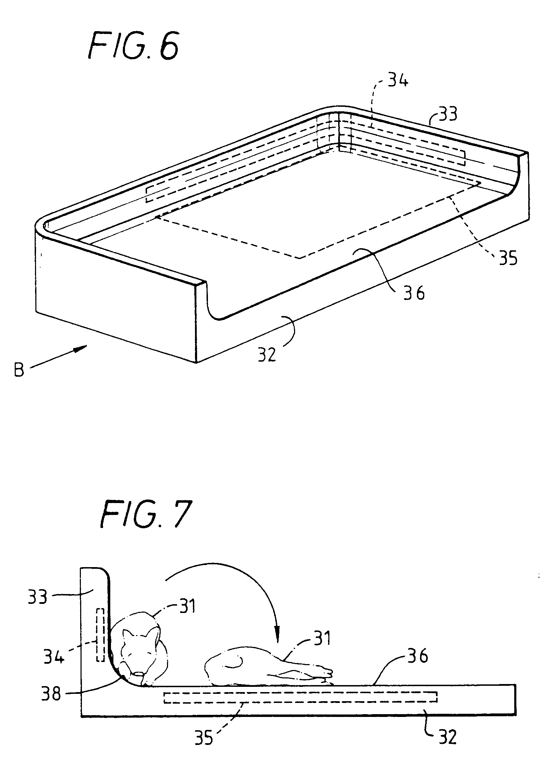

The operation of the wall member 15 is shown diagrammatically in Figure 5. The wall member 15 is inclined to the vertical at an angle of approximately 12¹/₂° which is a comfortable angle for the sow 30 to lean against and to slide to the floor 17. During this manoeuvre, the piglet 31 can easily creep under the lower end 18 of the wall member 15, into the escape area 19.

Referring now to Figures 6 and 7, in addition to Figure 1, the creep box 12 contains heating apparatus comprising a polymer concrete base 32, forming a floor component, with an upstanding lip 33 extending around three sides of the base 32, and forming a wall component. Cast into the upstanding lip 33 is a first electrical heating element 34 having a relatively high intensity output, and cast into the base 32 is a second electrical heating element 35 having a relatively low intensity output. The output of the first heating element 34 is set to be sufficient to be detectable by a piglet, and to attract piglets into the creep box from the farrowing pen 11. The output of the second heating element 35 is set to be sufficient to provide a comfortable degree of heating to allow piglets to lie for long periods on the floor 36 of the base 32, over the second heating element 35. As shown in Figure 7, the first heating element 34 is set at a height generally in the region of the snout of a piglet when standing. The lower part of the lip 33 joins the floor 36 at a curved region 38. This is arranged so that a piglet 31 attracted by the high intensity heating element 34 will be encouraged to roll over and lie on the floor 36 after being attracted into the creep box 12.

The heating element 34 may extend all or partway around the lip 33, and the second heating element 35 may extend all or part way across the floor 36. The second heating element 35 may for example produce an output in the region of 30 watts, and the first heating element 34 may have an output in the region of 15 watts, but generated over a smaller area, thus giving a higher intensity of heat radiation, which is thereby detectable by piglets. Conveniently the output of the second heating element 35 may be in the range 50 to 200 watts per square metre and the output of the first heating element 34 may be in the range 100 to 300 watts per square metre. By way of example the first heating element 34 may extend around the lip or wall 33 in a strip 30 to 100mm in depth, and the second heating element 35 may extend over an area of 0.2 to 1.0 square metres.

It is the difference in radiant energy emitted per unit area of each heating means, which determines the attraction capability of the first heating means, and the comfortable overall heating of the second heating means. In some circumstances the overall output of the first heating means 34 in Figure 6, may be less than the overall output of the second heating means 35. The important point is that the heat radiated per unit area is greater for the first heating means 34, in a relatively narrow strip around the wall 33, than is the case with the larger area of the second heating means 35.

## Claims

1. A farrowing pen for a sow and piglets comprising retaining means surrounding a farrowing area and including a member (15) spaced from a floor (17) of the farrowing area to provide a protected region beneath the member (15) for piglets to avoid crushing during lying down of a sow,
characterised in that the said member is a wall member (15) inclined to the vertical and sloping downwardly and inwardly towards the farrowing area, with a lower end (18) of the wall member (15) spaced from the floor (17) of the farrowing area to provide the said protected region, the wall member (15) providing an inclined surface such that a sow leaning against the wall member can slide down the wall member to the floor of the farrowing area.

2. A farrowing pen according to claim 1 in which the wall member (15) is inclined to the vertical at an angle lying in the range 10° to 15°.

3. A farrowing pen according to claim 2 in which the wall member (15) is inclined to the vertical at an angle of about 12½°.

4. A farrowing pen according to claim 1, 2 or 3 in which the said surface of the wall member (15) is a substantially continuous surface.

5. A farrowing pen according to any preceding claim in which the said surface of wall member (15) is a smooth surface.

6. A farrowing pen according to any preceding claim in which the said lower end (18) of the wall member (15) is spaced from the floor (17) by a distance in the range 150mm to 250mm.

7. A farrowing pen according to any preceding claim in which the depth of the inclined wall member (15) along the inclined surface is in the range 500 to 700mm.

8. A farrowing pen according to any preceding claim in which the retaining means includes an entrance (20) allowing entry and exit of the sow but preventing exit of piglets.

9. A farrowing pen according to any preceding claim in which the farrowing area is elongate and the said inclined wall member (15) is an elongate wall member aligned along the length of the farrowing area.

10. A farrowing pen according to claim 9 in which the pen includes only one elongate inclined wall member (15) as set out, whereby the sow when lying down is encouraged to lie down in one predetermined position.

11. A farrowing pen according to any preceding claim including an enclosure (12) for the piglets, the enclosure (12) having an entrance allowing entry and exit of the piglets but preventing entry of the sow.

12. A farrowing pen according to claim 10 in which the entrance of the enclosure (12) is positioned opposite the elongate wall member (15).

13. A farrowing pen according to claim 10 or 11 in which the enclosure (12) has heating means (34, 35) for heating the piglets.

14. A farrowing pen according to claim 13 in which the heating means comprises a first heating means (34) having an output of a relatively high intensity for attracting living creatures to a heated area, and a second heating means (35) having an output of a relatively low intensity for heating the creatures in the heated area.

15. A farrowing pen according to claim 14 in which the ratio of the output per unit area of the first heating means, to the output per unit area of the second heating means, is in the range of ratios from one and a half to one (1.5:1), to five to one (5:1).

16. A farrowing pen according to claim 14 or 15 in which the apparatus comprises a floor component (32) housing the second heating means (35) and a wall component (33) upstanding from the floor component (32) and housing the first heating means (34).

17. A farrowing pen according to claim 16 in which the first heating means (34) is housed in the wall component (33) in a position facing towards the second heating means (35) in the floor component (32) at a height in the region of the snout of a piglet, and the wall component (33) adjoins the floor component (32) by a curved junction (38), whereby in operation a piglet is attracted to the wall component (33) by the first heating means (34) and then rolls over or otherwise moves from the wall component (33) to a lying position on the floor component (32) in the region of the second heating means (35).

18. The use of an inclined wall (15) in a farrowing pen for guiding a sow during lying down on the floor in a farrowing area surrounded by retaining means, the wall member (15) being inclined to the vertical and sloping downwardly and inwardly towards the farrowing area, with a lower end (18) of the wall member (15) spaced from the floor (17) of the farrowing area to provide a protected region beneath the wall member (15) for piglets to avoid crushing during lying down of a sow, the wall member (15) providing an inclined surface such that a sow leaning against the wall member can slide down the wall member to the floor of the farrowing area.

19. The use of an inclined wall member according to claim 18, in a farrowing pen according to any of claims 2 to 17.

## Patentansprüche

1. Gehege zum Ferkeln für eine Muttersau und Ferkel, mit einem Rückhaltemittel, das einen Ferkelbereich umgibt und ein von einem Boden (17) des Ferkelbereichs beabstandetes Teil (15) beinhaltet, um einen geschützten Bereich unterhalb des Teils (15) für Fekel zu schaffen, um zu verhindern, daß sie zerdrückt werden, wenn sich eine Muttersau hinlegt,
dadurch gekennzeichnet, daß das Teil ein Wandteil (15) ist, das zur Vertikalen geneigt ist und nach unten und innen zum Ferkelbereich abgeschrägt verläuft, mit einem vom Boden (17) des Ferkelbereichs beabstandeten unteren Ende (18) des Wandteils (15), um den geschützen Bereich zu schaffen, wobei das Wandteil (15) eine schräge Fläche bereitstellt, so daß eine sich gegen das Wandteil lehnende Muttersau das Wandteil zum Boden des Ferkelbereichs hinunterrutschen kann.

2. Gehege zum Ferkeln nach Anspruch 1, bei dem das Wandteil (15) zur Vertikalen in einem im Bereich von 10° bis 15° liegenden Winkel geneigt ist.

3. Gehege zum Ferkeln nach Anspruch 2, bei dem das Wandteil (15) zur Vertikalen in einem Winkel von zirka 12¹/₂° abgeschrägt ist.

4. Gehege zum Ferkeln nach Anspruch 1, 2 oder 3, bei dem die Fläche des Wandteils (15) eine im wesentlichen durchgängige Fläche ist.

5. Gehege zum Ferkeln nach einem der vorangehenden Ansprüche, bei dem die Fläche des Wandteils (15) eine glatte Fläche ist.

6. Gehege zum Ferkeln nach einem der vorangehenden Ansprüche, bei dem das untere Ende (18) des Wandteils (15) vom Boden (17) in einer Entfernung im Bereich von 150 mm bis 250 mm beabstandet ist.

7. Gehege zum Ferkeln nach einem der vorangehenden Ansprüche, bei dem die Tiefe des abgeschrägten Wandteils (15) entlang der abgeschrägten Flache im Bereich von 500 bis 700 mm liegt.

8. Gehege zum Ferkeln nach einem der vorangehenden Ansprüche, bei dem das Rückhaltemittel einen Eingang (20) beinhaltet, der ermöglicht, daß die Muttersau hinein- und hinausgeht, aber verhindert, daß Ferkel hinausgehen.

9. Gehege zum Ferkeln nach einem der vorangehenden Ansprüche, bei dem der Ferkelbereich länglich ist und das geneigte Wandteil (15) ein längliches Wandteil ist, das entlang der Länge des Ferkelbereichs ausgerichtet ist.

10. Gehege zum Ferkeln nach Anspruch 9, bei dem das Gehege nur ein längliches abgeschrägtes Wandteil (15) wie beschrieben aufweist, wodurch die Muttersau beim Hinlegen ermutigt wird, sich in eine vorbestimmte Lage hinzulegen.

11. Gehege zum Ferkeln nach einem der vorangehenden Ansprüche einschließlich einer Umzäunung (12) für die Ferkel, wobei die Umzäunung (12) einen Eingang aufweist, der ermöglicht, daß die Ferkel hinein- und hinausgehen, aber verhindert, daß die Muttersau hineingeht.

12. Gehege zum Ferkeln nach Anspruch 10, bei dem der Eingang der Umzäunung (12) gegenüber dem länglichen Wandteil (15) angeordnet ist.

13. Gehege zum Ferkeln nach Anspruch 10 oder 11, bei dem die Umzäunung (12) eine Heizvorrichtung (34, 35) zum Wärmen der Ferkel aufweist.

14. Gehege zum Ferkeln nach Anspruch 13, bei dem die Heizvorrichtung ein erstes Heizmittel (34) beinhaltet, das eine Wärmeabgabe relativ hoher Intensität zum Anlocken von Lebewesen in einen beheizten Bereich besitzt und ein zweites Heizmittel (35), das eine Wärmeabgabe relativ niedriger Intensität zum Wärmen von Lebewesen in dem beheizten Bereich besitzt.

15. Gehege zum Ferkeln nach Anspruch 14, bei dem das Verhältnis der Wärmeabgabe pro Flächeneinheit des ersten Heizmittels zur Wärmeabgabe pro Flächeneinheit des zweiten Heizmittels im Bereich der Verhältnisse von anderthalb zu eins (1,5:1) bis fünf zu eins (5:1) liegt.

16. Gehege zum Ferkeln nach Anspruch 14 oder 15, bei dem die Vorrichtung ein Bodenelement (32), in dem das zweite Heizmittel (35) untergebracht ist, und ein Wandelement (33) beinhaltet, das vom Bodenelement (32) hochsteht und in dem das erste Heizmittel (34) untergebracht ist.

17. Gehege zum Ferkeln nach Anspruch 16, bei dem das erste Heizmittel (34) in dem Wandelement (33) in einer Position gegenüberliegend dem zweiten Heizmittel (35) in dem Bodenelement (32) in einer Höhe im Bereich der Schnauze eines Ferkels untergebracht ist und das Wandelement (33) an das Bodenelement (32) durch ein gebogenes Verbindungsstück (38) angrenzt, wodurch beim Betrieb ein Ferkel zum Wandelement (33) durch das erste Heizmittel (34) angelockt wird und sich dann herumdreht oder in anderer Weise von dem Wandelement (33) in eine liegende Stellung auf dem Bodenelement (32) im Bereich des zweiten Heizmittels (35) wegbewegt.

18. Verwendung einer geneigten Wand (15) in einem Gehege zum Ferkeln zum Führen einer Muttersau während des Hinlegens auf den Boden in einem von einem Rückhaltemittel umgebenen Ferkelbereich, wobei das Wandteil (15) zur Vertikalen geneigt ist und nach unten und innen zum Ferkelbereich geneigt verläuft, mit einem vom Boden (17) des Ferkelbereichs beabstandeten unteren Ende (18) des Wandteils (15), um einen geschützen Bereich unterhalb des Wandteils (15) für Ferkel zu schaffen, um zu verhindern, daß sie zerdrückt werden, wenn sich eine Muttersau hinlegt, wobei das Wandteil (15) eine schräge Fläche bereitstellt, so daß eine sich gegen das Wandteil lehnende Muttersau das Wandteil zum Boden des Ferkelbereichs hinunterrutschen kann.

19. Verwendung eines geneigten wandteils nach Anspruch 18 in einem Gehege zum Ferkeln nach einem der Ansprüche 2 bis 17.

## Revendications

1. Enclos de mise bas pour une truie et des porcelets, comprenant des moyens de retenue qui entourent une zone de mise bas et comprennent un élément (15) situé à distance du plancher (17) de la zone de mise bas pour créer, au-dessous de cet élément (15), une région protégée afin d'éviter que les porcelets ne soient écrasés pendant que la truie est couchée,
caractérisé en ce que ledit élément est un élément de paroi (15) incliné par rapport à la verticale et s'étendant en pente vers le bas et vers l'intérieur en direction de la zone de mise bas, l'extrémité inférieure (18) de l'élément de paroi (15) étant à distance du plancher (17) de la zone de mise bas pour créer ladite région protégée, l'élément de paroi (15) constituant une surface inclinée telle qu'une truie qui s'appuie contre l'élément de paroi puisse glisser le long de celui-ci vers le plancher de la zone de mise bas.

2. Enclos de mise bas selon la revendication 1, dans lequel l'élément de paroi (15) est incliné par rapport à la verticale d'un angle compris entre 10° et 15°.

3. Enclos de mise bas selon la revendication 2, dans lequel l'élément de paroi (15) est incliné par rapport à la verticale d'un angle de 12½° environ.

4. Enclos de mise bas selon l'une quelconque des revendications 1 à 3, dans lequel ladite surface de l'élément de paroi (15) est une surface pratiquement continue.

5. Enclos de mise bas selon l'une quelconque des revendications 1 à 4, dans lequel ladite surface de l'élément de paroi (15) est une surface lisse.

6. Enclos de mise bas selon l'une quelconque des revendications 1 à 5, dans lequel ladite extrémité inférieure (18) de l'élément de paroi (15) est séparée du plancher (17) par une distance comprise entre 150 mm et 250 mm.

7. Enclos de mise bas selon l'une quelconque des revendications 1 à 6, dans lequel la hauteur de l'élément de paroi incliné (15) le long de la surface inclinée est comprise entre 500 et 700 mm.

8. Enclos de mise bas selon l'une quelconque des revendications 1 à 7, dans lequel les moyens de retenue comprennent une entrée (20) qui permet à la truie d'entrer et de sortir, mais empêche les porcelets de sortir.

9. Enclos de mise bas selon l'une quelconque des revendications 1 à 8, dans lequel la zone de mise bas est oblongue et ledit élément de paroi incliné (15) est un élément de paroi oblong aligné le long de la longueur de la zone de mise bas.

10. Enclos de mise bas selon la revendication 9, dans lequel l'enclos ne comprend qu'un seul élément de paroi incliné et oblong (15) tel que décrit, de sorte qu'au moment où la truie se couche, elle soit incitée à s'allonger dans une position prédéterminée.

11. Enclos de mise bas selon l'une quelconque des revendications 1 a 10, contenant une enceinte (12) pour les porcelets, l'enceinte (12) présentant une entrée qui permet aux porcelets d'entrer et de sortir, mais empêche la truie d'entrer.

12. Enclos de mise bas selon la revendication 11, dans lequel l'entrée de l'enceinte (12) est située en face de l'élément de paroi oblong (15).

13. Enclos de mise bas selon la revendication 11 ou 12, dans lequel l'enceinte (12) contient des moyens de chauffage (34, 35) pour réchauffer les porcelets.

14. Enclos de mise bas selon la revendication 13, dans lequel les moyens de chauffage comprennent un premier moyen de chauffage (34) ayant une puissance calorifique d'intensité relativement élevée pour attirer les créatures vivantes dans une zone chauffée, et un second moyen de chauffage (35) ayant une puissance calorifique d'intensité relativement faible pour réchauffer les créatures dans la zone chauffée.

15. Enclos de mise bas selon la revendication 14, dans lequel le rapport de la puissance calorifique par unité de surface du premier élément de chauffage à la puissance calorifique par unité de surface du second moyen de chauffage est dans la gamme de rapports comprise entre un et demi à un (1,5:1) et cinq à un (5:1).

16. Enclos de mise bas selon la revendication 14 ou 15, dans lequel le dispositif comprend un élément de plancher (32) qui loge le second élément de chauffage (35) et un élément de paroi (33) qui se dresse sur l'élément de plancher (32) et loge le premier moyen de chauffage (34).

17. Enclos de mise bas selon la revendication 16, dans lequel le premier moyen de chauffage (34) est logé dans l'élément de paroi (33) dans une position située en face du second moyen de chauffage (35) dans l'élément de plancher (32), à une hauteur correspondant à la hauteur du groin d'un porcelet, et l'élément de paroi (33) se raccorde à l'élément de plancher (32) par une jonction courbe (38), de sorte qu'en service, un porcelet est attiré vers l'élément de paroi (33) par le premier moyen de chauffage (34), puis roule ou effectue un autre mouvement à partir de l'élément de paroi (33) vers une position couchée sur l'élément de plancher (32) dans la région du second moyen de chauffage (35).

18. Utilisation d'une paroi inclinée (15) dans un enclos de mise bas pour guider une truie, au moment où elle se couche sur le plancher, vers une zone de mise bas entourée par des moyens de retenue, l'élément de paroi (15) étant incliné par rapport à la verticale et s'étendant en pente vers le bas et vers l'intérieur en direction de la zone de mise bas, l'extrémité inférieure (18) de l'élément de paroi (15) étant à distance du plancher (17) de la zone de mise bas pour créer, au-dessous de cet élément (15), une région protégée afin d'éviter que les porcelets soient écrasés pendant que la truie est couchée, l'élément de paroi (15) constituant une surface inclinée telle qu'une truie qui s'appuie contre l'élément de paroi puisse glisser le long de celui-ci vers le plancher de la zone de mise bas.

19. Utilisation d'un élément de paroi incliné selon la revendication 18 dans un enclos de mise bas selon l'une quelconque des revendications 2 à 17.
